# EUROPÄISCHE PATENTSCHRIFT

(11) **EP 1 031 271 B1**
(45) Veröffentlichungstag und Bekanntmachung des Hinweises auf die Patenterteilung: **29.11.2006**
(21) Anmeldenummer: 00101405.9
(22) Anmeldetag: 25.01.2000
(51) Int. Cl.: A01F 12/40

(54) **Verteilvorrichtung einer Zerkleinerungsvorrichtung**
Distribution device for crusher
Dispositif de distribution pour broyeur

(30) Priorität: 16.02.1999 DE 19906453
(43) Veröffentlichungstag der Anmeldung: 30.08.2000
(73) Patentinhaber: DEERE & COMPANY, Moline, Illinois 61265-8098 (US)
(72) Erfinder: Bischoff, Lutz, 66503 Dellfeld (DE)
(74) Vertreter: Holst, Sönke

(56) Entgegenhaltungen:
- DE-A- 3 438 609
- FR-A- 1 239 857
- GB-A- 2 009 576
- US-A- 2 708 582
- US-A- 3 350 017

## Beschreibung

Die Erfindung betrifft eine Verteilvorrichtung einer Zerkleinerungsvorrichtung, mit einem Gehäuse, einem in dem Gehäuse angeordneten Zerkleinerungs- und Förderelement, und wenigstens einem gekrümmten Leitblech zur transversalen Streuung des Fördergutes, wobei Fördergut durch das Förderelement in Richtung auf die Leitbleche zu gefördert wird,

In der DE 34 38 609 A1 ist eine Vorrichtung gattungsgemäßer Art beschrieben. An einem Mähdrescher ist ein Anbauhäcksler angeordnet, der mit einer rotativ angetriebenen Häckslerwelle mit daran befestigten Messern, und einem diese umschließenden Gehäuse versehen ist. Das gehäckselte Stroh tritt durch ein Auswurfgehäuse aus, in dem mehrere gekrümmte Leitbleche befestigt sind. Durch die Krümmung wird das Stroh in seitlicher Richtung quer zur Förderrichtung abgelenkt und über das Feld verteilt. Unter normalen, trockenen Bedingungen wird das gehäckselte Stroh nach dem Verlassen der Leitbleche durch den Luftwiderstand gebremst und etwas verwirbelt. Dadurch kommt das Stroh als gleichmäßige Schicht auf den Boden zu liegen. Bei sehr feuchtem oder grünem und schwerem Stroh kann der Luftwiderstand das gehäckselte Stroh nicht so stark verwirbeln. Das Stroh verläßt die Leitbleche strahlenförmig und wird gebündelt bis auf den Boden geworfen. Dabei entstehen deutlich sichtbare Streifen hinter dem Mähdrescher, die sich den einzelnen Strohleitblechen zuordnen lassen. Die Endbereiche der Leitbleche sind zwar gegenüber der Flußrichtung des Strohs geringfügig abgewinkelt, jedoch ist nicht erkennbar, daß dadurch irgendeine Verbesserung der Streuwirkung eintritt.

Außerdem sind Diffusoren bekannt, die aus Zinken oder Blechstreifen bestehen, die am Ende der Leitbleche in den Materialfluß hineinragen und so den Strahl aufreißen. Diese Diffusoren sind wirkungsvoll, bremsen aber auch das Fördergut, so daß es nicht mehr weit genug geworfen werden kann. Auch kann die Anzahl der Leitbleche erhöht werden, so daß die einzelnen Strahlen durch die höhere Anzahl an Leitblechen nicht so ausgeprägt sind. Als nachteilig ist der höhere Aufwand anzusehen.

Das der Erfindung zugrunde liegende Problem wird in der ungleichmäßigen Verteilung des durch die Leitbleche austretenden Förderguts gesehen.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Der Kerngedanke besteht darin, den Winkel, um den das Leitblech das Fördergut ablenkt, über die Höhe (und/oder Breite) des Leitblechs wesentlich zu variieren. Diese Variation erfolgt dadurch, daß die wirksame Länge des Leitblechs, also der Abstand zwischen dem Austritt des Förderelements und dem Ende des Leitblechs über die Höhe (bzw. Breite) des Leitblechs unterschiedlich gestaltet ist. In einem ersten Bereich des Leitblechs steht das Fördergut somit über eine erste wirksame Länge mit dem Leitblech in Wechselwirkung und wird aufgrund der Krümmung des Leitblechs um einen ersten Winkel abgelenkt. In einem zweiten Bereich des Leitblechs ist der Abstand des Endes vom Förderelement und somit die wirksame Länge eine andere, und daher wird das Fördergut auch um einen zweiten, vom ersten Winkel unterschiedlichen Winkel abgelenkt. Auf diese Weise verläßt das Fördergut das Leitblech ohne Energieverlust in einem bestimmten Streuwinkelbereich, und nicht als gebündelter Strahl. Unter Höhe (Breite) des Leitblechs ist hier die quer zur Transportrichtung des Fördergutes gemessene Ausdehnung des Leitblechs zu verstehen; bei einem vertikal angebrachten Leitblech somit seine vertikale Höhe (und bei einem sich horizontal erstreckenden Leitblech die horizontale Breite). Unter Austritt des Förderelements wird hier insbesondere der Spalt zwischen einem Gehäuse und einem darin angeordneten Förderelement verstanden, aus dem das Fördergut beim Verlassen des Förderelements austritt. Unter einer wesentlichen Variation wird hier insbesondere eine Variation der wirksamen Länge des Leitblechs (und damit des Winkels, um den das Fördergut abgelenkt wird) von mindestens etwa 10 % über die quer zur Transportrichtung des Förderguts gemessene Ausdehnung des Leitblechs verstanden. Diese Variation kann bis zu etwa 40 % und auch darüber betragen. Vorzugsweise ist dieser Winkel so groß, daß im Zusammenwirken mit benachbarten Leitblechen ein kontinuierlicher Streuteppich entsteht.

Die Vorteile der Erfindung bestehen insbesondere darin, daß auf einfache und preiswerte Weise eine gleichmäßige seitliche Verteilung des Förderguts erzielt wird.

Um die nötige Variation des Abstands zwischen Austritt des Förderelements und Ende des Leitblechs - und somit des Winkels, um den das Fördergut abgelenkt wird - zu erreichen, kann das Ende des Leitblechs insbesondere schräg und/oder (treppenförmig) abgestuft gegenüber der Durchflußrichtung des Materials verlaufen. Die Schrägung hat den Vorteil einer kontinuierlichen Streuung, während Stufen den Strom des Förderguts in diskrete Winkel streuen. Sind die Stufen jedoch klein genug gewählt, dürfte eine hinreichend gleichmäßige Verteilung des Fördergutes gewährleistet sein. Der Winkel einer Schrägung beträgt vorzugsweise etwa 45°.

Die Ausgestaltung des dem Förderelement abgewandten Endes des Leitblechs ist im Rahmen des erfindungsgemäßen Gedankens beliebig, solange der Abstand vom Austritt des Förderelements über die Breite des Leitblechs variiert. Das Ende könnte also prinzipiell stufenförmig bzw. bogen- oder schlangenförmig gekrümmt verlaufen. Um eine möglichst gleichmäßige Verteilung des Förderguts zu erreichen, bietet sich jedoch an, dieses Ende näherungsweise geradlinig verlaufen zu lassen.

Weiterhin kann das Leitblech an seiner Unterseite kürzer als an seiner Oberseite sein, so daß das obere Ende des Leitblechs weiter vom Austritt des Förderelements als das untere Ende beabstandet ist. Eine derartige Ausführung bietet sich insbesondere aus Kompaktheitsgründen an, und um zu verhindern, daß das untere Ende des Leitblechs z.B. aus einem Verteilergehäuse, in dem das Leitblech unterhalb eines Bodenblechs angebracht ist, nach hinten herausragt und ein unerwünschtes Verletzungsrisiko darstellt. Es wäre auch denkbar, die untere Seite des Leitblechs länger als die obere zu gestalten, so daß sie im Hauptstrom des von dem Zerkleinerungs- und Förderelement abgegebenen Förderguts liegt, und letzteres weiter in seitliche Richtung ablenkt. Das weiter oben auf die Leitbleche treffende Fördergut wird nicht so weit abgelenkt, was aber aufgrund der geringeren Intensität des Materialstroms in diesem Bereich keine nachteilige Folge hat. Im Ergebnis wird das Fördergut homogen verteilt.

Aus Gründen der Material- und Gewichtsersparnis ist empfohlen, daß das dem Förderelement zugewandte Ende des Leitblechs ebenfalls abgeschrägt ist. Diese Schrägung kann insbesondere an das Förderelement angepaßt sein, welches das Fördergut an seinem Austritt in einen bestimmten Winkelbereich streut, indem das dem Förderelement zugewandte Ende des Leitblechs etwa senkrecht zur Bewegungsrichtung des auf das Leitblech treffenden Förderguts ausgerichtet wird.

Weiterhin bietet sich an, das Leitblech in an sich bekannter Weise schwenkbar anzubringen. Die Schwenkachse verläuft vorzugsweise quer zur Förderrichtung des Fördergutes, d.h. um eine vertikale und/oder horizontale Achse. Durch die Verschwenkung kann eine Anpassung an die - unterschiedlich feuchte bzw. schwere, und daher mehr oder weniger steil gegenüber der Horizontalen auszuwerfende - Art des Förderguts, an die Bodenneigung und/oder die Windrichtung erfolgen.

In der Regel wird nicht nur ein einziges Leitblech, sondern eine Vielzahl an Leitblechen Verwendung finden.

Die Erfindung findet insbesondere bei Erntemaschinen, wie Mähdreschern, Verwendung.

In den Zeichnungen ist ein nachfolgend näher beschriebenes Ausführungsbeispiel der Erfindung schematisch dargestellt. Es zeigen:
- Fig. 1: eine Erntemaschine mit einer erfindungsgemäßen Verteilvorrichtung;
- Fig. 2: einen vertikalen Schnitt durch die Verteilvorrichtung der Figur 1;
- Fig. 3: eine Draufsicht auf ein Leitblech; und
- Fig. 4: eine Seitenansicht des Leitblechs der Figur 3.

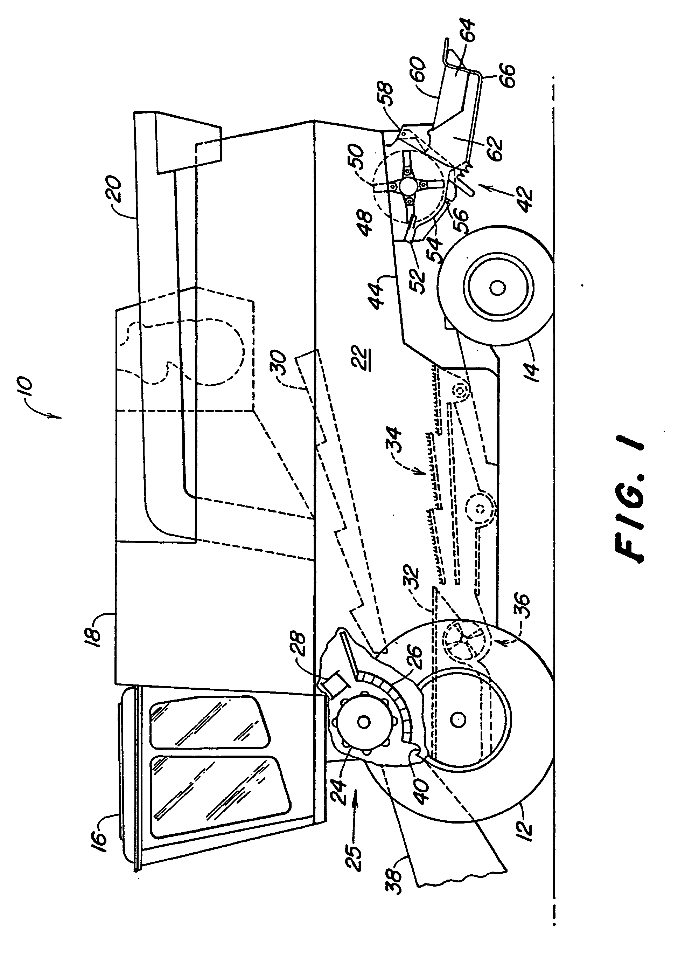

Eine in Figur 1 gezeigte Erntemaschine 10 in der Form eines Mähdreschers ist auf vorderen angetriebenen und rückwärtigen lenkbaren Rädern 12 bzw. 14 getragen und weist eine Fahrerkabine 16 auf, von der aus sie von einem Fahrer bedient werden kann. An die Fahrerkabine 16 schließt sich rückwärtig ein Korntank 18 an, der in ihn abgegebenes Gut über ein Entleerrohr 20 nach außen abgeben kann. Der Korntank 18 lagert auf einem Rahmen 22, in dem zugeführtes Gut auf dem Weg über eine Dreschtrommel 24, einen Dreschkorb 26 und eine Wendetrommel 28 in seine großen und kleinen Bestandteile zerlegt wird. Auf daran anschließenden Schüttlern 30, sowie auf einem Vorbereitungsboden 32 und Sieben 34 wird eine weitere Trennung des geernteten Guts durchgeführt, wobei schließlich der ausgedroschene Gutanteil in den Korntank 18 gefördert wird, die großen Erntegutteile über die Schüttler 30 in eine Ausfallhaube 44 des Mähdreschers 10 gefördert werden und leichte Bestandteile mittels eines Gebläses 36 von den Sieben 34 auf den Erdboden geblasen werden. Auf dem Erdboden liegendes oder stehendes Erntegut wird über einen Schrägförderer 38 und eine Steinfangmulde 40 der Dreschtrommel 24 zugeführt, nachdem es von einer nicht gezeigten Erntegutbergungsvorrichtung vom Erdboden aufgenommen worden ist. Anstelle der Schüttler 30 können auch eine oder mehrere rotierende Abscheidetrommeln vorgesehen sein.

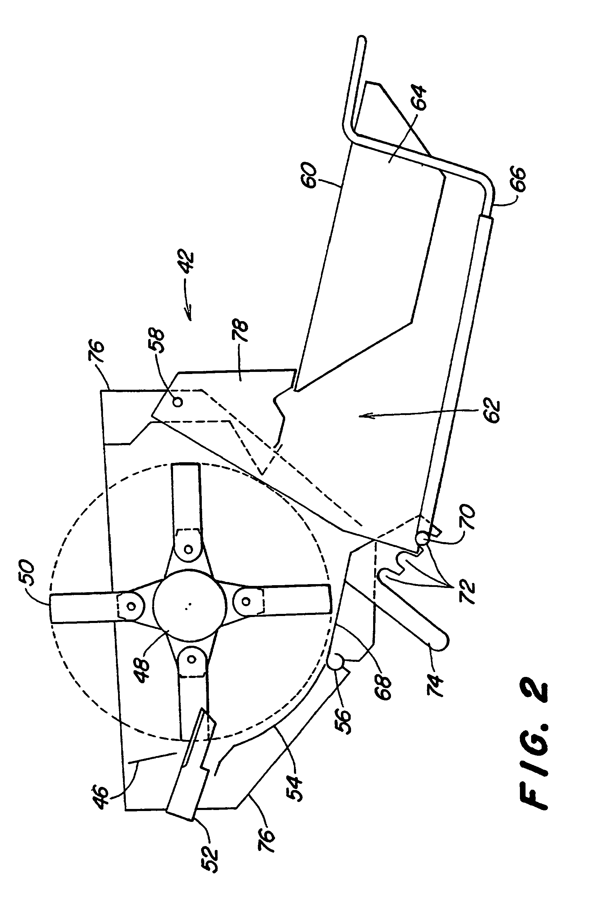

Am hinteren Ende der Ausfallhaube 44 ist eine Verteil- und Zerkleinerungsvorrichtung 42 vorgesehen, in die die von den Schüttlern 30 geförderten Bestandteile des Ernteguts, wie z.B. Stroh, aufgrund der Einwirkung der Schwerkraft gelangen. Die Verteil- und Zerkleinerungsvorrichtung 42 ist in Figur 2 detaillierter dargestellt. Das im folgenden als Fördergut bezeichnete Erntegut, das in die in einem Gehäuse 76 angeordnete Zerkleinerungs- und Verteilvorrichtung 42 gelangt, wird von einer schnell im Gegenuhrzeigersinn rotierenden Trommel 48 und Messern 50 erfaßt. Auf der Trommel 48 sind gleichmäßig über den Umfang verteilt mehrere Messer 50 beweglich angeordnet. Das Fördergut wird von der Trommel 48 und den Messern 50 mitgenommen und an einer feststehenden Leiste mit Gegenmessern 52 vorbei gezogen. Durch die Messer 50 und die Gegenmesser 52 wird das Fördergut in kurze Abschnitte gehäckselt. Die Trommel 48 mit den Messern 50 wirkt im Ergebnis als Zerkleinerungs- und Förderelement. Es gibt auch Bauformen von Häckslern, bei denen anstelle der beweglichen Messer 50 auf der Trommel 48 nur feststehende Mitnehmerplatten angeordnet sind. Diese Mitnehmerplatten führen das Stroh durch feststehende Gegenmesser. Die erfindungsgemäße Lehre ist auch auf diese Bauformen anwendbar.

Das gehäckselte Fördergut wird durch einen engen Spalt zwischen den Messern 50 und einem ersten Bereich 54 des Gehäuses 76 der Verteil- und Zerkleinerungsvorrichtung 42 in einer Kreisbahn geführt. Das Gehäuse 76 ist an der Unterseite der Ausfallhaube 44 befestigt, und umschließt die Trommel 48. Der erste Bereich 54 des Gehäuses 76 ist somit ortsfest an der Erntemaschine 10 angebracht. Das Fördergut wird anschließend durch die Trommel 50 an einem zweiten Bereich 68 des Gehäuses 76 vorbeigeführt, der an einer ersten, zur Zeichenebene orthogonalen Achse 56 schwenkbar am Gehäuse 76 angelenkt ist. Der erste Bereich 54 und der zweite Bereich 68 bilden einen sogenannten Häckslerboden, an dessen Ende das Fördergut die Kreisbahn verläßt und nach hinten auf den Erdboden ausgeworfen wird. Der zweite Bereich 68 des Gehäuses 76 ist ein flaches Blech, das sich über die gesamte wirksame Breite der Verteil- und Zerkleinerungsvorrichtung 42 erstreckt. Die Hauptmenge des Förderguts verläßt die Kreisbahn am Ende des zweiten Bereichs 68 tangential. Ein Teil wird aber durch die Messer 50 und die durch ihre Rotation resultierende Ventilation weiter herumgerissen. Es ergibt sich somit eine gewisse vertikale Streuung in der horizontalen Auswurfrichtung.

Am hinteren Ende der Zerkleinerungs- und Verteilvorrichtung 42 ist ein sogenannter Verteiler 62 angeordnet. Durch ihn soll das gehäckselte Fördergut möglichst gleichmäßig auf die Schnittbreite der Erntemaschine 10 quer zur Fahrtrichtung verteilt werden. Der Verteiler 62 weist ein um eine horizontale, senkrecht zur Zeichenebene verlaufende Achse 58, die im folgenden als zweite Achse bezeichnet wird, schwenkbares Bodenblech 60 auf. Die Neigung des gesamten Verteilers 62 relativ zum Erdboden kann so eingestellt werden. Unterhalb des Bodenblechs 60 ist eine Anzahl von Leitblechen 64 angeordnet. Die Leitbleche 64 sind längliche, sich senkrecht zum Bodenblech 60 nach unten erstreckende Bleche, die eine nach rechts oder nach links gerichtete Krümmung aufweisen. Zusätzlich können die Leitbleche 64 in ihrer Position quer zur Fahrtrichtung der Erntemaschine 10 verstellt werden. Durch die Krümmung und die Orientierung wird das Fördergut beim Passieren der Leitbleche 64 quer zur Fahrtrichtung der Erntemaschine 10 abgelenkt und so über eine größere Breite als die, die dem Arbeitskanal der Erntemaschine 10 entspricht, auf dem Boden verteilt.

Im Ergebnis wirkt die Trommel 48 mit den Messern 50 und dem ersten Bereich 54 und zweiten Bereich 68 des Gehäuses 76 als Zerkleinerungs- und Fördervorrichtung, und der zweite Bereich 54 sowie der Verteiler 62 mit den Leitblechen 64 als Verteilvorrichtung für das Fördergut.

Das gehäckselte Fördergut soll möglichst gleichmäßig über die gesamte Schnittbreite der Erntemaschine 10 verteilt werden. Kritisch ist insbesondere die Verteilung sehr feuchten oder grünen und schweren Förderguts, da der Luftwiderstand das Fördergut nicht so stark verwirbeln kann wie trockenes Fördergut, das nach Verlassen der Leitbleche 64 durch den Luftwiderstand gebremst und etwas verwirbelt wird, und dadurch als gleichmäßige Schicht auf dem Erdboden zu liegen kommt. Das feuchte oder grüne Fördergut verläßt bei bekannten Mähdreschern die Leitbleche 64 in unerwünschter Weise strahlenförmig und wird so gebündelt bis auf den Boden geworfen. Dabei entstehen deutlich sichtbare Streifen hinter der Erntemaschine 10, die sich den einzelnen Leitblechen 64 zuordnen lassen.

Deshalb ist eine Kopplung zwischen dem zweiten Bereich 68 des Gehäuses 76 und den mit dem Verteiler 62 verbundenen Leitblechen 64 vorgesehen. An einem seitlichen Ende (oder beiden Enden) des zweiten Bereichs 68 sind unterseitig Hebel 74 angebracht. Außerdem sind (in Vorwärts-Fahrtrichtung der Erntemaschine 10) hinter den Hebeln 74 Aussparungen 72 an der Unterseite des zweiten Bereichs 68 vorgesehen. Die Aussparungen 72 sind kammartig in die Unterseite des zweiten Bereichs 68 eingebracht und weisen jeweils unterschiedliche Abstände von der ersten Achse 56 auf. Die Tiefe der Aussparungen 72 ist ebenfalls jeweils unterschiedlich, um die Neigung der Leitbleche 64 und des zweiten Bereichs 68 in die gewünschte Relation zu bringen, wie weiter unten ausgeführt. Jeweils eine dieser Aussparungen 72 nimmt eine Querstange 70 auf, die mit dem Verteiler 62 verbunden ist. Die Querstange 70 erstreckt sich über die gesamte Breite des Verteilers 62, und ist über Stangen 66 und zwei Seitenbleche 78, die am (in Fahrtrichtung der Erntemaschine 10) linken und rechten Rand des Verteilers 62 angebracht sind, mit dem Bodenblech 60 und den daran fixierten Leitblechen 64 verbunden. Mit der Auswahl der Aussparung 72 wird die Neigung des Verteilers 62 festgelegt. Gleichzeitig wird dabei die Neigung des zweiten Bereichs 68 des Gehäuses 76 und damit die horizontale Auswurfrichtung des gehäckselten Förderguts an die Verteilerneigung angepaßt. Um bei allen möglichen Arbeitsstellungen des Verteilers 62 eine optimale Anpassung der Auswurfrichtung zu erhalten, sind die Positionen der ersten Achse 56, der zweiten Achse 58 und der Aussparungen 72 so ausgewählt, daß folgende Kriterien erfüllt werden: Die gedachte Verlängerung der unteren Kante der Leitbleche 64 sollte bei allen Stellungen des Strohverteilers 62 die Bewegungskreisbahn, die sich durch die Führung des Förderguts durch den ersten Bereich 54 und zweiten Bereich 68 ergibt, tangential berühren. In dem Bereich, wo diese gedachte Verlängerung die Kreisbahn tangential berührt, befindet sich die erste Achse 56. Kurz davor endet der mit dem Gehäuse 76 fest verbundene erste Bereich 54. Der Übergang vom feststehenden ersten Bereich 54 zum zweiten Bereich 68 erfolgt mit einem kleinen Absatz so, daß der Spalt zwischen beiden Bereichen 54, 68 im Schatten der Bewegungsbahn des Förderguts liegt. Dadurch kann sich kein Fördergut im Spalt festsetzen. Die Aussparungen 72 sind so mit dem zweiten Bereich 68 verbunden, daß der zweite Bereich 68 das Fördergut stets in den unteren Bereich der Leitbleche 64 richtet. Im Idealfall ist der zweite Bereich 68 parallel zum unteren Rand der Leitbleche 64 gerichtet.

Das Verstellen der Neigung des Verteilers 62 erfolgt folgendermaßen: während der Verteiler 62 in seiner Position festgehalten wird, wird der Hebel 74 im Gegenuhrzeigersinn bewegt, so daß die Querstange 70 außer Eingriff mit der jeweils von ihr besetzten Aussparung 72 gerät. Dann kann der Verteiler 62 derart verschwenkt werden, daß die Querstange in die Nähe einer anderen (gewünschten) Aussparung 72 gerät, und der Hebel 74 kann im Uhrzeigersinn verschwenkt, oder einfach losgelassen werden, so daß er sich durch Einwirkung der Schwerkraft im Uhrzeigersinne dreht. Die Arretierung der Querstange 70 in der Aussparung 72 erfolgt ebenfalls durch die Schwerkraft, die ein Drehmoment erzeugt, das den Verteiler 62 im Uhrzeigersinn zu drehen versucht, während sie den zweiten Bereich 68 ebenfalls in diese Richtung dreht. Im Ergebnis wird die Querstange 70 gegen den Bodenbereich der jeweiligen Aussparung 72 gedrückt, und der zweite Bereich 68 und der Verteiler 62 sind relativ zueinander, und zum ersten Bereich 54 arretiert. Um auch bei unebenem Erdboden ein unbeabsichtigtes Lösen der Querstange 70 aus ihrer Aussparung 72 zu verhindern, kann eine zusätzliche Arretierung des zweiten Bereichs 68 und/oder des Verteilers 62 zweckmäßig sein. Sie kann durch eine (Flügel-) Mutter auf einem die zweite Achse 58 bildenden Bolzen, und/oder eine entfernbare Abdeckung (schwenkbare Leiste, Blech, Feder, oder dergleichen) an der Unterseite der Aussparungen 72 sein, die ein Herausspringen der Querstange 70 aus der jeweiligen Aussparung 72 verhindert. Die zusätzliche Arretierung ist vor einer Verstellung der Neigung des Verteilers 62 zu lösen und danach wieder in Position zu bringen. Alternativ oder zusätzlich kann der Hebel 74 durch eine Feder im Gegenuhrzeigersinn gespannt werden, um eine zuverlässige Arretierung zu erhalten. Es kann eine Zugfeder unterhalb des zweiten Bereichs 68 des Gehäuses 76, oder eine Drehfeder um die erste Achse 56 verwendet werden.

Aufgrund der Positionierung der zweiten Achse 58 kann der gesamte Verteiler 62 im Gegenuhrzeigersinn vom zweiten Bereich 68 vertikal nach oben verschwenkt werden. Wie aus Figur 1 erkennbar ist, kann der Verteiler 62 vertikal nach oben an die Rückwand der Erntemaschine 10 geschwenkt (und mit nicht in der Zeichnung dargestellten Mitteln dort arretiert) werden, so daß er z. B. beim Straßentransport der Erntemaschine 10 insbesondere mit angehängtem Schneidwerkswagen nicht stört.

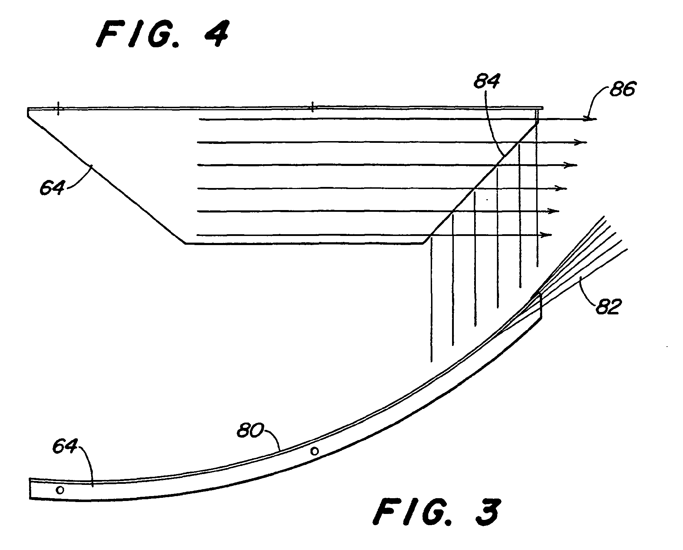

Die Leitbleche 64 besitzen eine Krümmung 80, die in Figur 3 wiedergegeben ist. Das gehäckselte Fördergut wird entsprechend der Krümmung 80 in einer Kurvenbahn geführt. Am Ende der Leitbleche 64 verläßt das Fördergut die Kurvenbahn tangential und wird so gegenüber der Fahrtrichtung der Erntemaschine 10 seitlich abgelenkt auf das Feld geworfen. Bei der dargestellten Ausführungsform verläuft das in Figur 4 erkennbare Ende des Leitblechs 64 schräg unter einem Winkel von etwa 45° gegenüber der durch Pfeile 86 angedeuteten Flußrichtung des Förderguts. Dadurch wird das Fördergut im oberen Bereich des Leitblechs 64 weiter (d.h. länger) in der Kurvenbahn geführt als im unteren. Da das Fördergut die Kurvenbahn unten früher verläßt als im oberen Bereich, wird es nicht so weit seitlich abgelenkt. Auf diese Weise verläßt das Fördergut die Leitbleche 64 ohne Energieverlust in einem bestimmten Streuwinkel 82, und nicht als gebündelter Strahl. Die beschriebene Wirkung wird besonders gut erzielt, wenn das gehäckselte Fördergut möglichst quer zur Krümmung durch die Leitbleche 64 geführt wird. Das wird durch die oben beschriebene Lösung zur Anpassung der horizontalen Auswurfrichtung des Strohs erreicht.

## Patentansprüche

1. Verteilvorrichtung einer Zerkleinerungsvorrichtung, mit einem Gehäuse (76), einem in dem Gehäuse (76) angeordneten Zerkleinerungs- und Förderelement, und wenigstens einem gekrümmten Leitblech (64) zur transversalen Streuung des Fördergutes, wobei Fördergut durch das Förderelement in Richtung auf die Leitbleche (64) zu gefördert wird, **dadurch gekennzeichnet, daß** der Abstand zwischen dem Austritt des Förderelements und dem Ende des Leitblechs (64) über die quer zur Transportrichtung gemessene Ausdehnung des Leitblechs (64) um einen Betrag variiert, der mindestens 10 % des Abstands zwischen dem Austritt des Förderelements und dem Ende des Leitblechs (64) entspricht.

2. Verteilvorrichtung nach Anspruch 1, **dadurch gekennzeichnet, daß** das dem Förderelement abgewandte Ende (84) des Leitblechs (64) relativ zur Flußrichtung des Förderguts vorzugsweise unter einem Winkel von etwa 45° abgeschrägt und/oder abgestuft ist.

3. Verteilvorrichtung nach Anspruch 1 oder 2, **dadurch gekennzeichnet, daß** das dem Förderelement abgewandte Ende des Leitblechs (64) in etwa geradlinig verläuft.

4. Verteilvorrichtung nach einem der Ansprüche 1 bis 3, **dadurch gekennzeichnet, daß** das Leitblech (64) in Flußrichtung des Förderguts gesehen am unteren Rand kürzer oder länger als am oberen Rand ist.

5. Verteilvorrichtung nach einem der vorhergehenden Ansprüche, **dadurch gekennzeichnet, daß** das dem Förderelement zugewandte Ende des Leitblechs (64) ebenfalls abgeschrägt ist.

6. Verteilvorrichtung nach einem der Ansprüche 1 bis 5, **dadurch gekennzeichnet, daß** der Winkel, um den das Leitblech (64) das Fördergut ablenkt, über die quer zur Transportrichtung gemessene Ausdehnung des Leitblechs (64) um einen Betrag von mindestens 10 % variiert.

7. Verteilvorrichtung nach einem der vorhergehenden Ansprüche, **dadurch gekennzeichnet, daß** das Leitblech (64) um eine Achse (58) schwenkbar ist, die quer zur Flußrichtung des Förderguts verläuft.

8. Verteilvorrichtung nach einem der vorhergehenden Ansprüche, **gekennzeichnet durch** mehrere Leitbleche (64).

9. Kombination aus einer Erntemaschine (10), insbesondere einem Mähdrescher, und einer Verteilvorrichtung nach einem der vorhergehenden Ansprüche.

## Claims

1. A distributor device of a comminuting device, with a housing (76), a comminuting and conveying element arranged in the housing (76), and at least one curved guide plate (64) for transverse spreading of the conveyed material, wherein conveyed material is fed by the conveying element in the direction on to the guide plate (64), **characterized in that** the distance between the exit of the conveying element and the end of the guide plate (64) varies over the extent of the guide plate (64) measured transverse to the transport direction by an amount which corresponds to at least 10% of the distance between the exit of the conveying element and the end of the guide plate (64).

2. A distributor device according to claim 1, **characterized in that** the end (84) of the guide plate (64) remote from the conveying element is bevelled off, preferably at an angle of about 45° and/or is stepped.

3. A distributor device according to claim 1 or 2, **characterized in that** the end of the guide plate (64) remote from the conveying element runs approximately in a straight line.

4. A distributor device according to any of claims 1 to 3, **characterized in that** the guide plate (64) regarded in the flow direction of the conveyed material is shorter or longer at the lower edge than at the upper edge.

5. A distributor device according to any of the preceding claims, **characterized in that** the end of the guide plate (64) facing the conveying element is also bevelled off.

6. A distributor device according to any of claims 1 to 5, **characterized in that** the angle about which the guide plate (64) deflects the conveyed material varies by an amount of at least 10% over the extent of the guide plate (64) measured transverse to the transport direction.

7. A distributor device according to any of the preceding claims, **characterized in that** the guide plate (64) can pivot about an axis (58) which runs transverse to the direction of flow of the conveyed material.

8. A distributor device according to any of the preceding claims, **characterized by** a plurality of guide plates (64).

9. A combination of a harvesting machine (10), especially a combine harvester, and a distributor device according to any of the preceding claims.

## Revendications

1. Dispositif de distribution d'un dispositif de hachage, comportant un carter (76), un élément de hachage et de transport monté dans le carter (76), et au moins une plaque de guidage (64) courbe pour la distribution transversale de la matière transportée, la matière transportée étant acheminée par l'élément de transport vers les plaques de guidage (64), **caractérisé en ce que** la distance entre la sortie de l'élément de transport et l'extrémité de la plaque de guidage (64), sur la dimension de la plaque de guidage (64) mesurée perpendiculairement à la direction de transport, varie d'une valeur qui correspond à au moins 10 % de la distance entre la sortie de l'élément de transport et l'extrémité de la plaque de guidage (64).

2. Dispositif de distribution selon la revendication 1, **caractérisé en ce que** l'extrémité (84) de la plaque de guidage (64), opposée à l'élément de transport, est inclinée et/ou étagée par rapport à la direction du flux de la matière transportée, de préférence selon un angle de 45° environ.

3. Dispositif de distribution selon la revendication 1 ou 2, **caractérisé en ce que** l'extrémité de la plaque de guidage (64), opposée à l'élément de transport, est sensiblement droite.

4. Dispositif de distribution selon l'une quelconque des revendications 1 à 3, **caractérisé en ce que** la plaque de guidage (64), par référence à la direction du flux de la matière transportée, est plus courte ou plus longue sur le bord inférieur que sur le bord supérieur.

5. Dispositif de distribution selon l'une quelconque des revendications précédentes, **caractérisé en ce que** l'extrémité de la plaque de guidage (64), orientée vers l'élément de transport, est également inclinée.

6. Dispositif de distribution selon l'une quelconque des revendications 1 à 5, **caractérisé en ce que** l'angle selon lequel la matière transportée est déviée par la plaque de guidage (64) varie d'une valeur de 10 % au moins sur la dimension de la plaque de guidage (64) mesurée perpendiculairement à la direction de transport.

7. Dispositif de distribution selon l'une quelconque des revendications précédentes, **caractérisé en ce que** la plaque de guidage (64) est apte à pivoter autour d'un axe (58) qui est orienté perpendiculairement à la direction du flux de la matière transportée.

8. Dispositif de distribution selon l'une quelconque des revendications précédentes, **caractérisé par** plusieurs plaques de guidage (64).

9. Combinaison formée par une machine de récolte (10), en particulier une moissonneuse-batteuse, et un dispositif de distribution selon l'une quelconque des revendications précédentes.
